# EUROPEAN PATENT SPECIFICATION

(11) **EP 0 328 058 B1**
(45) Date of publication and mention of the grant of the patent: **01.06.1994**
(21) Application number: 89102135.4
(22) Date of filing: 08.02.1989
(51) Int. Cl.: C08F 2/50

(54) **Polymerizable composition and polymer obtaining from the same**
Polymerisierbare Zusammensetzung und Polymer, hergestellt aus dieser
Composition polymérisable et polymère obtenu à partir de cette composition

(30) Priority: 12.02.1988 JP 31541/88
(43) Date of publication of application: 16.08.1989
(73) Proprietor: SEKISUI KAGAKU KOGYO KABUSHIKI KAISHA, Osaka shi Osaka (JP)
(72) Inventor: Nakasuga, Akira, Omiya-shi Saitama (JP)
(74) Representative: Hansen, Bernd, Dr. Dipl.-Chem.

(56) References cited:
- US-A- 4 077 860
- PATENT ABSTRACTS OF JAPAN, vol. 3, no. 50 (C-44), 27th April 1979, page 49; JP-A-54 24 988
- PATENT ABSTRACT OF JAPAN, vol. 8, no. 106 (C-223)[1543], 18-05-1984; & JP-A-59 20 305
- JOURNAL OF POLYMER SCIENCE, PART A1, POLYMER CHEM., vol. 10, no. 7, July 1972, pages 2005-2012, John Wiley & Sons, Inc., New York, US; T. OGAWA et al.: "Effects of trivalent phosphorus compounds on vinyl polymerizations. II. Photopolymerization of acrylonitrile in the in the presence of triphenylphosphite"

## Description

### FIELD OF THE INVENTION

The present invention relates to a polymerizable composition which polymerization-cures upon exposure to radiation such as light or an electron beam. This invention further relates to a polymer obtained by polymerizing the polymerizable composition.

### BACKGROUND OF THE INVENTION

The so-called irradiation polymerization method, in which a polymerizable composition containing a monomer, oligomer or polymer each having an unsaturated double bond is polymerized by irradiating the composition with light or an electron beam, has the following advantages.
(1) The use of solvents can be avoided in the process, thus causing no air pollution and making it possible to eliminate the large-scale drying zone.
(2) The production efficiency can be increased relative to the scale of the production equipment.
(3) Image-wise selective polymerization in accordance with predetermined patterns such as pictures or characters is feasible, so that polymerized products having letterpress-like patterns can be obtained.

Due to such advantages, this polymerization technique is applied in the fields of adhesives, pressure-sensitive adhesives, interlayers, coating agents, inks, printing plates, sealing compounds for electrical or electronic parts, materials for resists for use in making circuit-boards and surface modifiers for polymers or metals.

However, the conventional polymerizable compositions which polymerize upon exposure to light, an electron beam or other radiation have the following disadvantages.
(1) In the case where a layer of the polymerizable composition is applied on a surface and then cured by the photopolymerization technique, since only the parts exposed to radiation can polymerize, the shape of the resulting product is limited.
(2) Where irradiation polymerization is carried out under an air atmosphere, the polymerizable composition cannot contain a monofunctional monomer such as an acrylate or an allyl group-containing compound because considerable part of such a monomer will remain unreacted due to the radical reaction-inhibiting effect of oxygen. Thus, a polyfunctional prepolymer or oligomer or a highly reactive monomer should inevitably be used and, hence, the resulting polymerized product hardly has a high degree of polymerization, although a high degree of crosslinking is attainable.
(3) Where irradiation polymerization is carried out in the presence of oxygen, a peroxo-polymer molecule is formed among the polymer molecules, and will attack other polymer molecules over a prolonged period of time, leading to the deterioration of the polymer product.
(4) The compounds having an unsaturated double bond generally have the skin irritating property.

Especially, the oxygen-induced problems, (2) and (3) above, are serious problems accompanying both light polymerization and electron-beam polymerization. As one method for overcoming those problems, there may be a method in which the whole atmosphere for coating and irradiation is replaced with an inert gas such as nitrogen so as to completely exclude the influence of oxygen. However, because of its high running cost, it is difficult to practice this method in a commercial plant, apart from laboratories, where the production process comprises a continuous polymerization curing system.

As another possible method for overcoming such inhibition of polymerization by oxygen, JP-A-56-30410 proposes a method in which a stannous salt such as stannous acetate, stannous stearate and stannous laurate is admixed with and dissolved in a photopolymerizable pressure-sensitive adhesive composition. However, although a higher concentration of oxygen in the atmosphere is tolerated in this method as compared with that in the conventional methods, this method is disadvantageous in that if an anionic functional group such as that derived from acrylic acid is present in the reaction system, gelation occurs even at an extremely low degree of conversion and, hence, monomers which can be employed in this method are limited.

The gelation is a troublesome problem because it occurs even when a photopolymerizable syrup containing a stannous salt is subjected to partial polymerization to increase its viscosity to a spreadable level or when a stannous salt is incorporated in a photopolymerizable syrup which has already been partially polymerized. Further, there is the disadvantage that by this cross-linking with metals, a flexibility or high elongation is deteriorated due to the resulting high molecular weight material.

JP-A-49-95702 and 50-103536 teach that a composite material of polyen and polyol can reduce the effect of inhibiting a reaction of oxygen at curing by the reducing property of thiol. However, this method has disadvantages that it costs too much and the composition emits an offensive smell drived from the thiol at the time of coating, although tough cured films can be obtained.

It has been found that the adverse effect of the oxygen dissolved in polymerizable compositions can be decreased and the oxygen tolerance in the atmosphere for polymerization curing can be heightened by incorporating a phosphite compound or a thiophosphite compound in the polymerizable compositions.

The term "JP-A" as used herein means an "unexamined published Japanese patent application".

Accordingly, one object of the present invention is to provide a polymerizable composition which can be polymerized in continuous process upon exposure to radiation such as light or an electron beam, without being adversely affected by oxygen.

Another object of the present invention is to provide a polymer produced by exposing the above composition to actinic rays such as light, an electron beam or other radiation. This polymer can be used in various fields as will be described later.

The foregoing and other objects, features and advantages of the present invention will be apparent to those skilled in the art from the following detailed description and appended claims.

### DETAILED DESCRIPTION OF THE INVENTION

The present invention provides a photopolymerizable composition comprising
a) a straight chain or branched alkyl (meth) acrylate having 1 to 18 carbon atoms in the alkyl moiety,
b) at least one unsaturated monomer copolymerizable with component a), selected from the group consisting of acrylic acid, methacrylic acid and itaconic acid,
c) a polymerization initiator, and
d) 0.001 to 30 parts by weight, per 100 parts of the photopolymerizable composition, of a phosphite or thiophosphite compound.

If desired, a sensitizer, an antioxidant, a pigment, a filler or other additives can be incorporated into the photopolymerizable composition.

The straight chain or branched alkyl acrylate and alkyl methacrylate may be used alone or in combination with each other. The alkyl acrylate and/or the alkyl methacrylate is combined with an unsaturated monomer copolymerizable therewith selected from acrylic acid, methacrylic acid and itaconic acid.

In this invention, the phosphite compound or the thiophosphite compound is preferably one having, in its molecular structure, at least one unit represented by 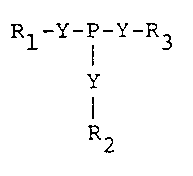
wherein P represents trivalent phosphorus, Y represents sulfur or oxygen, and R₁, R₂ and R₃ each represents an alkyl group, a phenyl group, a group having an unsaturated double bond such as an acrylate group or an allyl group, or a hydroxyl group.

Such compounds are generally employed as an antioxydant for plastics which has the ability to decompose peroxides.

Examples of the phosphite compound which can be used in the present invention include tertiary phosphites such as triphenyl phosphite, diphenylisodecyl phosphite, phenyldiisodecyl phosphite, 4,4'-butylidene-bis(3-methyl-6-t-butylphenyl-di-tridecyl) phosphite, cyclic neopentanetetraylbis(octadecyl) phosphite and tris(mono- and/or di-nonyl phenyl) phosphite; and secondary phosphite such as dilauryl hydrogenphosphite and dioleyl hydrogenphosphite. Further, a phosphite of a compound having an unsaturated double bond, such as hydroxyethylacrylate phosphite or allyl phosphite, is preferably employed because such a phosphite copolymerizes with the oligomer,prepolymer or monomer as the main component and, as a result, will not migrate from the resulting final polymer.

Secondary and tertiary thiophosphites such as trilauryl trithiophosphite and trinonyl trithiophosphite can also be used.

Among the above-described phosphite and thiophosphite compounds, those having a phenyl group mostly show good stability in their dissolved state, although such compounds are generally not so good from the standpoint of the efficiency of photopolymerization because they well absorb ultraviolet light. Compounds of this class include trisphenyl phosphite and phenyldiisodecyl phosphite. Further, those having an alkyl group are highly active just after being dissolved in the reaction system, but the stability of such compounds in their dissolved state is poor to some extent.

The thiophosphite compounds are highly active and stable and show good chain transferability, so that they are excellent in the ability to prevent the inhibition of radical polymerization by the dissolved oxygen.

Therefore, in the case where a high degree of polymerization is desired, the phosphite compounds are preferably employed; in the case where a prepolymer is used as the main ingredient or where a polyfunctional monomer is used as the main ingredient to attain a high degree of crosslinking, those having good chain transferability are preferably employed from the standpoint of improving reactivity. That is, a phosphite compound or a thiophosphite compound may be suitably selected according to each intended product.

The above-described phosphite compounds and thiophosphite compounds are generally used for the purpose of preventing oxidative deterioration by radical reaction, but if the polymerization of a monofunctional unsaturated monomer is allowed to proceed in the presence of such a compound, as in the case of the composition of the present invention, the inhibition of polymerization by the dissolved oxygen can be eliminated.

The amount of the phosphite compound or thiophosphite compound is varied, depending on its kind and the reaction system. However, it is generally in the range of from 0.001 to 30 parts by weight, preferably 0.1 to 10 parts by weight, per 100 parts by weight of the polymerizable composition.

Examples of the polymerization initiator include acetophenone-type compounds such as 2,2-diethoxyacetophenone, benzophenone-type compounds, Michler's ketone-type compounds, benzil-type compounds, benzoin-type compounds, benzoin alkyl ethers, benzyl dimethyl ketal-type compounds, tetramethylthiuram monosulfide and thioxanthone-type compounds.

Examples of the sensitizer include amines, urea, sodium diethyl dithiophosphate, N,N-di-substituted-p-aminobenzonitrile-type compounds, tri-n-butylphosphine, nitrogen-containing compounds such as Michler's ketone and chlorine-containing compounds such as carbon tetrachloride.

The polymerizable composition of the present invention may be polymerized batch-wise in a state of bulk or solution (hereinafter referred to as "batch polymerization method"). Alternatively, the composition with no solvent may be admixed with a polymerization initiator and, if desired, a crosslinking agent, or it may be first partially polymerized so as to increase its viscosity to a spreadable level and then admixed with a polymerization initiator and, if needed, a crosslinking agent, and the resulting composition may be applied on a substrate by means of a coater and then polymerized in a photo-reaction zone or with radiation (hereinafter referred to as "in-site-polymerization").

In the case where the polymerizable composition of the present invention is subjected to the batch polymerization, the polymerization reaction can be performed by merely making only a vapor phase contacting the reaction system inert, without removing the oxygen dissolved in the reaction system. The thus-obtained polymerized composition is comparable to those prepared by the conventional methods and can be suitably used as a pressure-sensitive adhesive and in many other fields. For example, in the case of a polymerized composition for use as a pressure-sensitive adhesive, the polymerized composition is applied on various film substrates such as plastic tapes and other films, and then dried to obtain pressure-sensitive adhesive tapes.

In the above process, a heat-activative crosslinking agent such as an isocyanate compound, an epoxy compound or melamin may be added to the polymerized composition before applying the same to substrates, thereby crosslinking the polymerized composition in the subsequent step of drying.

Further, the in-site-polymerization by photo-reaction has the advantage that it is not necessary to replace oxygen dissolved in the reaction syrup with nitrogen, and the tolerance concentration of oxygen present in the reaction atmosphere is higher than the conventional method. According to need, crosslinking agents may be used in this method. Examples of the crosslinking agent include polyfunctional monomers such as hexanediol diacrylate and a methacrylate, benzaldehyde. By the combined use of such crosslinking agents, gel fraction can be increased, thereby improving the heat resistance and creep resistance of the resulting polymer product such as a pressure-sensitive adhesive or others.

The polymerizable composition of the present invention may also contain an inorganic filler such as glass beads, a microspherical silicon, a microspherical alumina or glass bubbles, or a microspherical plastic filler such as acrylic beads or a microspherical acrylic foam, thereby increasing the tensile strength and increasing the compression stress of the polymerized product to be obtained. Further, by adding soft microspheres such as vinylidene fluoride balloon, it is possible to decrease the tensile strength and decrease the compression stress.

As the source of radiation for photopolymerization, there may be employed a commercially available lamp such as a high-pressure mercury lamp, a low-pressure mercury lamp, a metal halide lamp, a so-called health-ray lamp, a chemical lamp or a black light lamp. However, it is preferred that an appropriate lamp be suitably selected taking into consideration the wavelengths which activate the polymerization initiator in the composition to be irradiated.

According to the present invention, the incorporation of the phosphite compound or the thiophosphite compound into the polymerizable composition serves to eliminate the inhibition by the dissolved oxygen of the polymerization of radical-polymerizable unsaturated compounds, whereby the time required for polymerization and curing can be reduced and the gelation of the reaction system can be avoided. Thus, the uniformity and high efficiency of polymerization can be attained by the present invention.

As mentioned hereinbefore, the inhibition of polymerization by oxygen can be completely or considerably eliminated in the polymerization of the composition of the present invention and, hence, the polymerizable composition of the present invention can be advantageously polymerized by either the batch polymerization method or the in-site polymerization method.

For example, in the case where the polymerizable composition comprises a monofunctional acrylate or methacrylate compound, the oxygen tolerance concentration present in the reaction atmosphere is greatly relaxed. Even in the case of covering the polymerizable composition with a transparent film to prevent the same from the exposure to air in the polymerization step, the reaction inhibition by the dissolved oxygen can be excluded without operation of nitrogen replacement. As a result, adverse effects of the dissolved oxygen, such as the increase in the amount of the monomer remaining unreacted, the discoloration of the resulting polymers and ununiform polymerization, can be eliminated.

In the case where the polymerizable composition comprises, as the main ingredient, a polyfunctional acrylate or various oligomers, both of which are not susceptible to the effect of the dissolved oxygen, polymerization can take place immediately after the initiation of irradiaton, and proceed uniformly. Further, even a polymerizable composition layer having a thickness of 30 mm or more can be polymerized with radiation of low intensity such as 1 mW/cm² or lower. Moreover, the formation of a peroxopolymer in the final polymer product can be effectively suppressed, thus preventing the deterioration of the product.

Furthermore, the prior art process in which a relatively large amount of an amine should be added to the polymerizable composition has the disadvantage of short pot life, whereas the polymerizable composition of the present invention is free from such disadvantage.

Due to the advantages as described above, the polymerizable composition of the present invention is useful in various fields. For example, in the field of pressure-sensitive adhesives, various kinds of pressure-sensitive adhesive sheets of high qualities can be produced efficiently by the use of the present composition. Further, in the field of adhesives and sealing compounds, the polymerizable composition of the present invention can be used in many fields, taking advantage of its property of quickly setting upon exposure to ultraviolet light. Such applications include bonding in the production of optical instruments or objects such as a lens and prism, piezoelectric buzzers, liquid crystal panels and video-related devices; fixing of coil windings; insulation sealing of electrical apparatus to be fixed on something; sealing of relays, switch terminals and other electronic apparatus; bonding of the windscreens and faces of wrist watches; fixing of recording heads; bonding of wineglass cups to their stems; and bonding of other glass goods such as a finger ring and a pendant.

Furthermore, in the field of functional coating agents which are used in order to modify the natures of the surfaces of plastics, the polymerizable composition of the present invention can be advantageously used as an abrasion-resistant coating agent, an anti-fogging agent and a releasing agent. In this field, the quality of the products can be improved due to the decreased amount of the monomers remaining unreacted in the final products, and the running cost can be reduced due to the increased oxygen tolerance. Still further, in the field of printing and resists, the polymerizable composition is advantageously used because uniform resolution can be obtained due to the uniform polymerization of the polymerizable composition. Also, in the field of interlayers, which should be somewhat flexible polymers having high degrees of polymerization and high elongation from the standpoints of improving both the adhesion of the interlayer to glass plates and the impact resistance of the interlayer itself, both the present photopolymerizable composition comprising a monofunctional monomer and the polymer obtained therefrom, which are free from ununiform polymerization and monomers reamining unreacted, are preferably used.

As explained above, the polymer obtained by exposing the polymerizable composition of the present invention to actinic rays such as radiation including light or an electron beam can be advantageously used in various fields as an adhesive, a pressure-sensitive adhesive, a surface modifier for plastics and metals, an interlayer, a coating agent, an ink, a printing plate, a sealing compound for electrical or electronic parts, a material for resists for use in making circuit-boards.

The present invention will be explained in more detail by reference to the following Examples.

### EXAMPLE 1

In a 2 liter separable flask were introduced 500 ml of ethyl acetate, 460 g of 2-ethylhexyl acrylate, 40 g of acrylic acid, 0.25 g of benzyl dimethyl ketal and 7 g of cyclic neopentanetetraylbis(octadecyl) phosphite, and the resulting mixture was stirred under an air atmosphere.

The thus-obtained mixture in the flask was subjected to radiation from a 20 W chemical lamp placed under the flask at a distance of 10 cm from it. Two minutes later, a considerable increase in viscosity was observed and the temperature of the mixture was 45°C. The irradiation was continued for additional 10 minutes. Subsequently, to the mixture thus obtained was added a solution prepared by dissolving 1 g of benzyl dimethyl ketal in 20 ml of ethyl acetate, and the resulting mixture was irradiated in the same manner as above. After 10 minute irradiation, the temperature of the mixture began to decrease gradually after reaching 60°C, so the irradiation was stopped. Thus, a pressure-sensitive adhesive solution was obtained.

To this pressure-sensitive adhesive solution was added 0.1 g of hexane diisocyanate, and the resulting solution was applied on a 25 µm thick polyethylene terephthalate (PET) film in a coating thickness of 30 µm. Reaction was allowed to proceed by heating the coated film at 80°C for 5 minutes and then at 120°C for 1 minute. As a result, a pressure-sensitive sheet having excellent pressure sensitivity was obtained. That is, this sheet has an SP adhesive strength of 1,500 g/25 mm and a normal-temperature holding power (20 x 20 cm² test area, 500 g load) of one week.

The SP adhesive strength and holding power were measured in the following manners.

### SP Adhesive Strength:

A tape sample is adhered on a 2 mm thick stainless steel plate by one reciprocation of 2 kg roller thereon, and is allowed to stand for 24 hours or more. The force required to peel the tape in a 180° direction at a peeling rate of 300 mm/min. is measured.

### Holding Power:

A tape sample is adhered on a 2 mm thick stainless steel plate with an adhesion area of 25 mm x 25 mm by pressing with 2 kg roller. A load of 500 g is applied at the edge of the tape, and the time (minute) until the tape falls off the plate at normal conditions (temperature 23°C, humidity 65%) is measured.

### COMPARATIVE EXAMPLE 1

An irradiation test was conducted in the same manner as in Example 1 except that cyclic neopentanetetraylbis(octadecyl) phosphite was not used for the preparation of the mixture. As a result, no increase in viscosity was observed even after 15 minute irradiation, showing that polymerization reaction had not proceeded. Therefore, this experiment was stopped. The reaction system had turned yellow at that time.

### EXAMPLE 2

In a 2 liter separable flask were introduced 920 g of 2-ethylhexyl acrylate, 80 g of acrylic acid, 1 g of benzyl dimethyl ketal and 10 g of phenyldiisodecyl phosphite, and the resulting mixture was irradiated with ultraviolet light from a 20 W chemical lamp placed under the flask at a distance of 10 cm from the bottom of the flask. In 1 minute irradiation, the viscosity of the mixture reached 50 Pa.s. At that time, the temperature of the mixture was 42°C and conversion was 7% by weight.

The thus-obtained viscous solution was diluted at 2.5 times with a monomer mixture of 92% 2-ethylhexyl acrylate and 8% acrylic acid, thus obtaining a syrup having a viscosity of 1 Pa.s.

100 g of this syrup was mixed with 1.5 g of a microspherical plastic, "Matsumoto Microsphere" (manufactured by Matsumoto Yushi-Seiyaku Co., Ltd., Japan), and 0.02 g of hexanediol diacrylate. The resulting syrup mixture was cast-coated on a release film at a thickness of 1 mm, and this coating was covered with a 75 µm transparent PET film. Subsequently, this covered coating was subjected to radiation from a 20 W chemical lamp place over the coating at a distance of 10 cm from it. As a result, curing was completed in 3 minutes. Thus, there was obtained an elastic pressure-sensitive sheet, in which the amount of the monomers remaining unreacted was not higher than 0.01%.

### EXAMPLE 5

To 100 g of 2-ethylhexyl acrylate were added 10 g of acrylic acid, 0.05 g of benzyl methyl ketal and 2 g of triisooctyl phosphite, and the resulting mixture was introduced into a beaker made of borate glass. The mixture in the beaker was then subjected to radiation from a 20 W chemical lamp placed at a distance of 10 cm from the mixture. In 30 seconds, the viscosity of the mixture began to increase. The irradiation was continued further, and when the temperature of the mixture reached 40°C, the irradiation was stopped, thereby obtaining a syrup having a viscosity of 5 Pa.s as measured at 25°C.

The syrup thus obtained was cast-coated on a release PET film in a thickness of 100 µm. The coating was overlaid with a PET film bearing a printed pattern composed of opaque portions and, dispersed therein, transparent dotted portions each having a diameter of 1 mm. Subsequently, this covered coating was subjected to radiation for 5 minutes from a 20 W chemical lamp placed over the coating at a distance of 10 cm. Thus, there was obtained a sheet having uncured portions and photocured dotted portions in accordance with the pattern of the overlay. The thus-obtained sheet was immersed in a toluene solvent, and the monomers remaining unreacted were removed by washing.

The resulting sheet was dried at 80°C for 10 minutes, thereby obtaining a sheet having a layer of projecting, pressure-sensitive dotted portions.

## Claims

1. A photopolymerizable composition comprising
a) a straight chain or branched alkyl (meth) acrylate having 1 to 18 carbon atoms in the alkyl moiety,
b) at least one unsaturated monomer copolymerizable with component a), selected from the group consisting of acrylic acid, methacrylic acid and itaconic acid,
c) a polymerization initiator, and
d) 0.001 to 30 parts by weight, per 100 parts of the photopolymerizable composition, of a phosphite or thiophosphite compound.

2. A photopolymerizable composition as claimed in claim 1, wherein the phosphite or thiophosphite compound is a compound having in its molecule at least one unit represented by 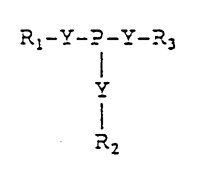 wherein P is trivalent phosphorus, Y is sulfur or oxygen, and R₁, R₂ and R₃ each is an alkyl group, a phenyl group, a group having an unsaturated double bond, or a hydroxyl group.

3. A photopolymerizable composition as claimed in claim 1, wherein the amount of the phosphite compound is 0.1 to 10 parts by weight per 100 parts by weight of the photopolymerizable composition.

4. A pressure-sensitive adhesive obtained by exposing the photopolymerizable composition as claimed in claim 1 to an actinic ray, thereby polymerizing the composition.

## Patentansprüche

1. Photopolymerisierbare Zusammensetzung, umfassend
a) ein geradkettiges oder verzweigtes Alkyl-(meth)acrylat mit 1 bis 18 Kohlenstoffatomen in dem Alkylrest,
b) mindestens ein ungesättigtes Monomer aus der Gruppe aus Acrylsäure, Methacrylsäure und Itaconsäure, welches mit der Komponente a) copolymerisierbar ist,
c) einen Polymerisationsinitiator und
d) 0,001 bis 30 Gew.-Teile einer Phosphit- oder Thiophosphitverbindung, bezogen auf 100 Teile der photopolymerisierbaren Zusammensetzung.

2. Photopolymerisierbare Zusammensetzung nach Anspruch 1, wobei die Phosphit- oder Thiophosphitverbindung eine Verbindung ist, die in ihrem Molekül mindestens eine Einheit, dargestellt durch 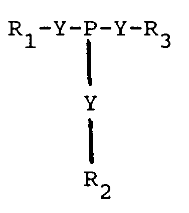 aufweist, wobei P trivalenter Phosphor ist, Y Schwefel oder Sauerstoff ist, und R₁, R₂ und R₃ jeweils eine Alkylgruppe, eine Phenylgruppe, eine Gruppe mit einer ungesättigten Doppelbindung oder eine Hydroxylgruppe bedeuten.

3. Photopolymerisierbare Zusammensetzung nach Anspruch 1, wobei die Menge der Phosphitverbindung 0,1 bis 10 Gew.-Teile pro 100 Gew.-Teile der photopolymerisierbaren Zusammensetzung beträgt.

4. Druckempfindliches Adhäsiv, welches dadurch erhalten worden ist, daß die photopolymerisierbare Zusammensetzung nach Anspruch 1 einer aktinischen Bestrahlung unter Polymerisieren der Zusammensetzung ausgesetzt worden ist.

## Revendications

1. Composition photopolymérisable comprenant
a) un groupe alkyl(méth)acrylate ramifié ou à chaîne droite, ayant 1 à 18 atomes de carbone dans la fraction alkyle;
b) au moins un monomère insaturé copolymérisable avec le composant a), choisi dans le groupe formé par l'acide acrylique, l'acide méthacrylique et l'acide itaconique;
c) un initiateur de polymérisation, et
d) 0,001 à 30 parties en poids, pour 100 parties de la composition photopolymérisable d'un composé phosphite ou thiophosphite.

2. Composition photopolymérisable selon la revendication 1, dans laquelle le composé phosphite ou thiophosphite est un composé ayant dans sa molécule au moins un motif représenté par 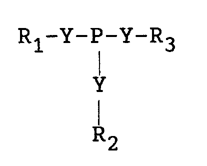 dans lequel P est un atome de phosphore trivalent, Y est un atome de soufre ou d'oxygène, et R₁, R₂ et R₃ représentent chacun un groupe alkyle, un groupe phényle, un groupe ayant une double liaison insaturée, ou un groupe hydroxyle.

3. Composition photopolymérisable selon la revendication 1, dans laquelle la quantité du composé phosphite est 0,1 à 10 parties en poids pour 100 parties en poids de la composition photopolymérisable.

4. Adhésif sensible à la pression obtenu en exposant la composition photopolymérisable selon la revendication 1 à un rayonnement actinique, polymérisant ainsi la composition.
